# EUROPEAN PATENT SPECIFICATION

(11) **EP 3 582 872 B1**
(45) Date of publication and mention of the grant of the patent: **14.09.2022**
(21) Application number: 17777067.4
(22) Date of filing: 14.02.2017
(51) Int. Cl.: F16J 15/3232, B01D 25/21, B01D 25/127, B01D 25/28

(54) **METHOD FOR SEALING A VERTICAL PRESSURE FILTER, VERTICAL PRESSURE FILTER, AND ELONGATED SEALING MEMBER**
VERFAHREN ZUM ABDICHTEN EINES VERTIKALEN DRUCKFILTERS, VERTIKALER DRUCKFILTER UND LÄNGLICHES ABDICHTELEMENT
PROCÉDÉ D'ÉTANCHÉIFICATION D'UN FILTRE À PRESSION VERTICALE, FILTRE À PRESSION VERTICALE ET ÉLÉMENT D'ÉTANCHÉITÉ ALLONGÉ

(43) Date of publication of application: 25.12.2019
(73) Proprietor: Metso Outotec Finland Oy, 33900 Tampere (FI)
(72) Inventor: ILLI, Mika, 01700 Vantaa (FI); KAIPAINEN, Janne, 53300 Lappeenranta (FI)
(74) Representative: Boco IP Oy Ab
(86) International application number: PCT/FI2017/050081
(87) International publication number: WO 2018/150074

(56) References cited:
- WO-A1-2004/113772
- WO-A1-2010/121827
- CN-B- 103 721 454
- DE-A1- 4 223 022
- GB-A- 2 031 294
- GB-A- 2 120 570
- JP-A- 2008 264 599
- US-A- 4 274 961

## Description

### Field of the invention

The invention relates to method for sealing a vertical as pressure filter defined in the preamble of independent claim 1.

The invention also relates to a vertical pressure filter as defined in the preamble of independent claim 6.

Publication US 3,695,440 present a vertical filtering device.

Publication WO 2004/113772 presents a sealing strip.

Publication WO 2010121827A presents a plate component for a filter press system

Publication GB 2 120 570A presents a filter plate.

### Objective of the invention

The object of the invention is to extend the service-life of elongated sealing member(s) in a method for sealing a vertical pressure filter and in a vertical pressure filter.

### Short description of the invention

The method of the invention is characterized by the definitions of independent claim 1. Preferred embodiments of the method are defined in the dependent claims 2 to 5.

The vertical pressure filter of the invention is correspondingly characterized by the definitions of independent claim 6.

Preferred embodiments of the vertical pressure filter are defined in the dependent claims 7 to 10.

Two ridge portions distribute force more even than one ridge portion. This extends the service-life of the elongated sealing member.

Two ridge portions distribute deformation force more even than one ridge portion, whereby the elongated sealing member is more evenly deformed. This extends the service-life of the elongated sealing member.

Two ridge portions distribute pressing force more even on a mounting surface of the base portion of the elongated sealing member than one ridge portion and into the adhesive between the elongated sealing member and the circumferential grove. This promotes sealing.

Because the elongated sealing member comprises the first ridge portion and the second ridge portion, when the elongated sealing member is pressed against the upward facing surface section of the endless movable filter fabric belt, adhesive is also pressed into the area that is vertically beneath the portion of the elongated sealing member situated between the first ridge portion and the second ridge portion, because of the higher pressure under the ridge portions at the mounting surface of the base portion of the elongated sealing member than the pressure under the portion between the ridge portions at the mounting surface of the base portion of the elongated sealing member.

Provision of two ridge portions also reduces shear force in the lateral direction of the elongated sealing member.

### List of figures

In the following the invention will described in more detail by referring to the figures, which
Figure 1 shows is side view a vertical pressure filter according to an embodiment in a closed state of a filter pack of the vertical pressure filter,
Figure 2 shows the vertical pressure filter shown in figure 1 in an open state of the filter pack of the vertical pressure filter,
Figure 3 shows in cross section a detail of the vertical pressure filter shown in figure 1 in a closed state of the filter pack of the vertical pressure filter,
Figure 4 shows in cross section a detail of the vertical pressure filter shown in figure 1 in a closed state of the filter pack of the vertical pressure filter,
Figure 5 shows in shows in cross section a detail of a movable filter plate of the vertical pressure filter shown in figure 1,
Figure 6 shows a section of the elongated sealing member of the vertical pressure filter shown in figure 1,
Figures 7 to 13 show in end view some embodiments of the elongated sealing member.

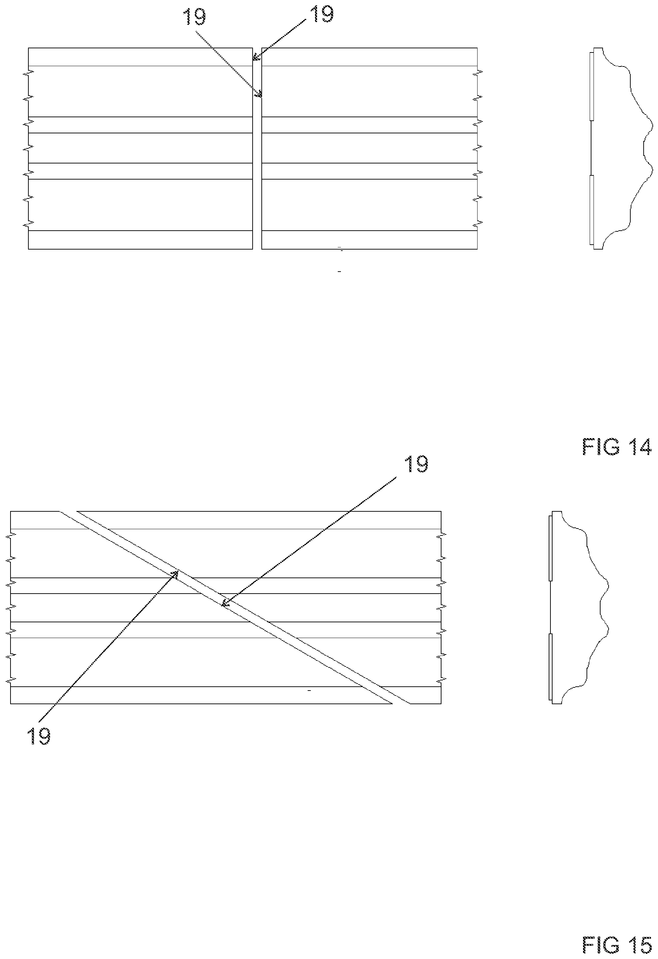

Figure 14 show the opposite ends of the elongated sealing member is an embodiment of the method and of the vertical pressure filter,
Figure 15 show the opposite ends of the elongated sealing member is another embodiment of the method and of the vertical pressure filter, and

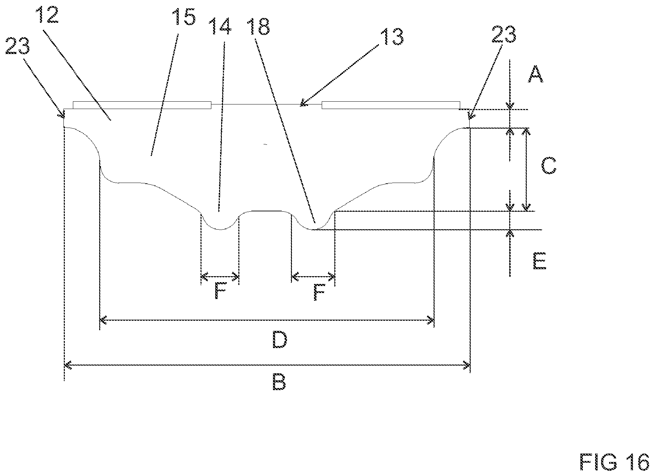

Figure 16 show in end view an embodiment of the elongated sealing member.

### Detailed description of the invention

First the method for sealing a vertical pressure filter 1 and some variants and embodiments of the method will be described in greater detail.

The vertical pressure filter 1 comprises a filter pack 2 comprising a plurality of separate horizontally arranged and vertically movable filter plates 3

Each filter plate 3 has a lower surface 4 and an upper surface 5.

The vertical pressure filter 1 comprises an endless movable filter fabric belt 6 arranged in zigzag manner between the filter plates 3.

The vertical pressure filter 1 comprises closing and opening means 7 for vertically moving said plurality of separate horizontally arranged and vertically movable filter plates 3 against each other into a closed state of the filter pack 2 to form filter chambers 8 between the filter plates 3 and upward facing surface sections 9 of the endless movable filter fabric belt 6 and for vertically moving said plurality of separate horizontally arranged and vertically movable filter plates 3 away from each other into an open state of the filter pack 2 to open said filter chambers 8.

The method comprises providing an elongated sealing member 10, which is completely formed of elastically deformable material and which comprises a base portion 12 comprising a mounting surface 13, a first ridge portion 14 and an intermediate portion 15 between the base portion 12 and the first ridge portion 14.

The method comprises attaching the mounting surface 13 of the elongated sealing member 10 to a bottom 16, which can, as shown in the figures, be a plane bottom, in a circumferential groove 11 in the lower surface 4 of at least one separate horizontally arranged and vertically movable filter plate 3 by means of adhesive 17 that is provided between the mounting surface 13 of the elongated sealing member 10 and the bottom 16 of the circumferential groove 11 so that the first ridge portion 14 of the elongated sealing member 10 faces an upward facing surface section 9 of the endless movable filter fabric belt 6.

The method comprises pressing the elongated sealing member 10 against the upward facing surface section 9 of the endless movable filter fabric belt 6 in the closed state of the filter pack 2 by means of the closing and opening means 7.

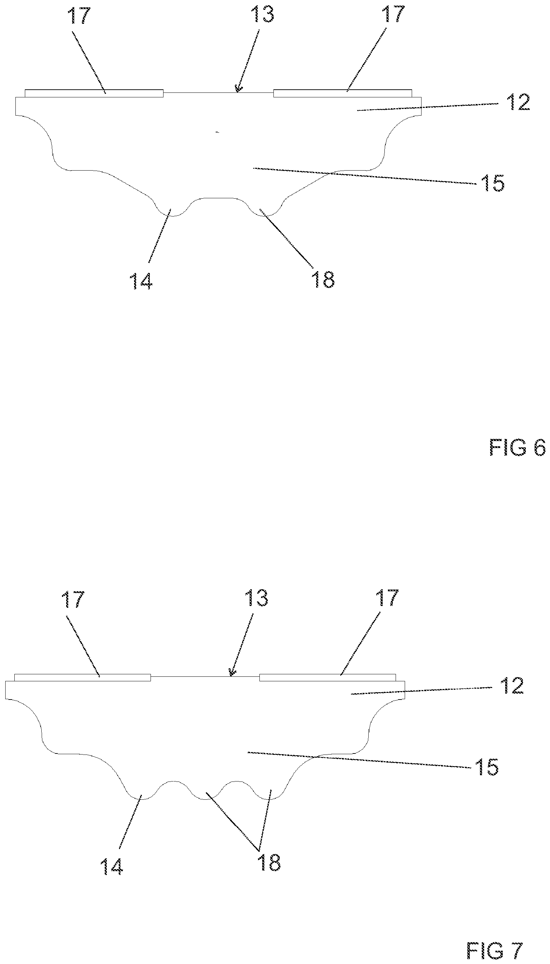

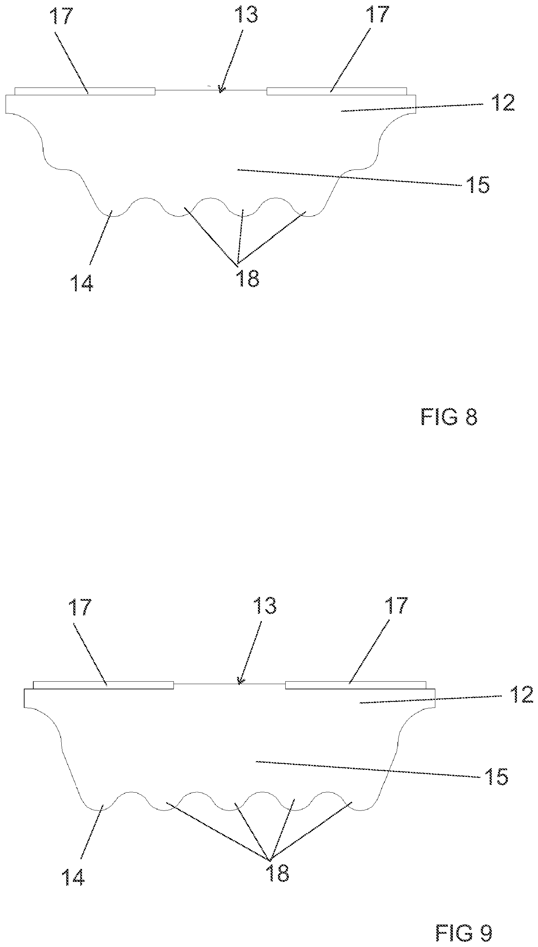

The elongated sealing member 10 that is provided in the method comprises additionally at least one second ridge portion 18 that extends side-by-side, such as in parallel, with the first ridge portion. The elongated sealing member 10 can for example comprise one second ridge portion as shown in figure 6, two second ridge portions as shown in figure 7, three second ridge portions as shown in figure 8, or four second ridge portions as shown in figure 9.

The method comprises arranging the elongated sealing member 10 in the circumferential groove 11 in the lower surface 4 of said at least one separate horizontally arranged and vertically movable filter plate 3 so that said at least one second ridge portion 18 of the elongated sealing member 10 also faces said upward facing surface section 9 of the endless movable filter fabric belt 6.

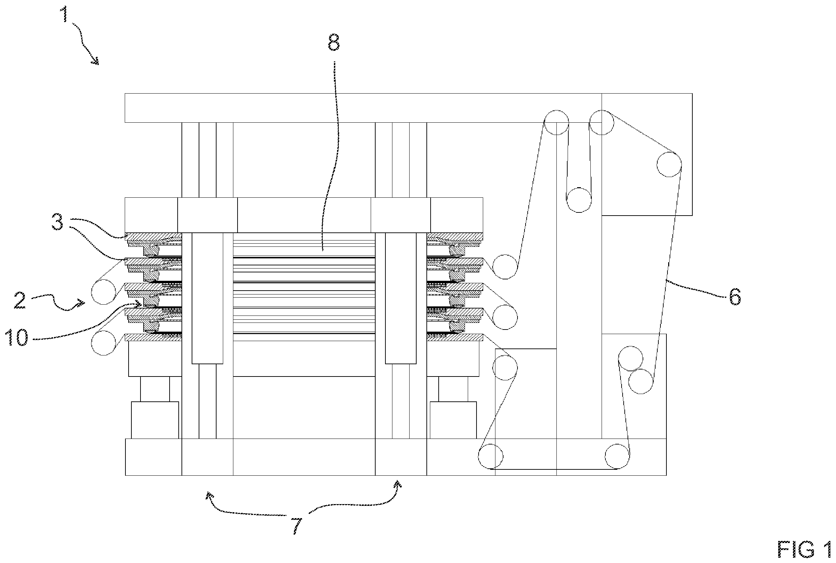

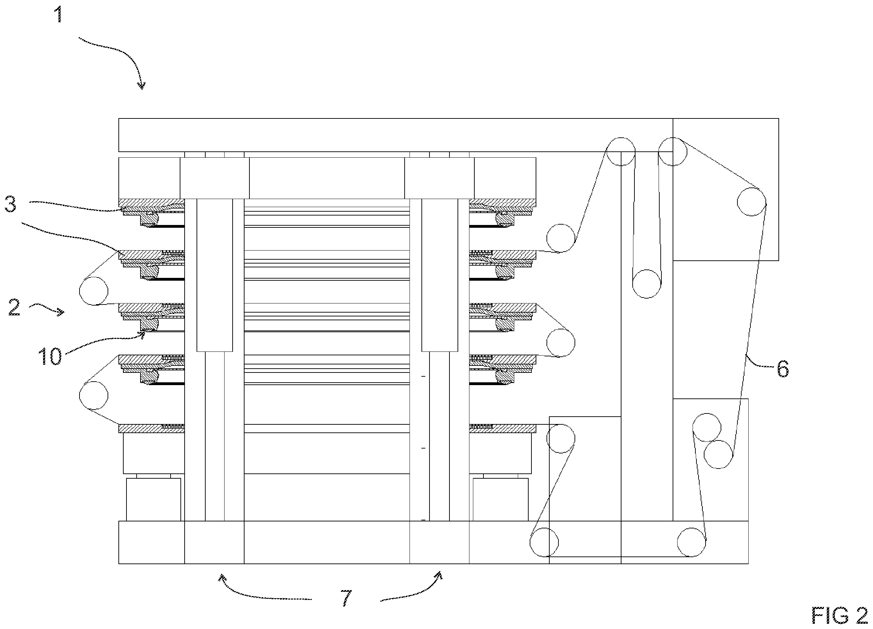

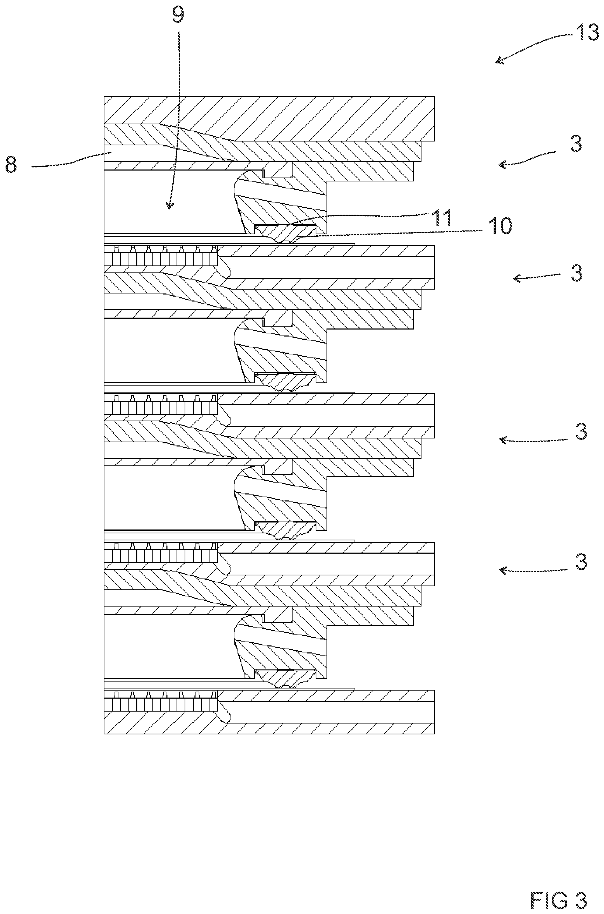

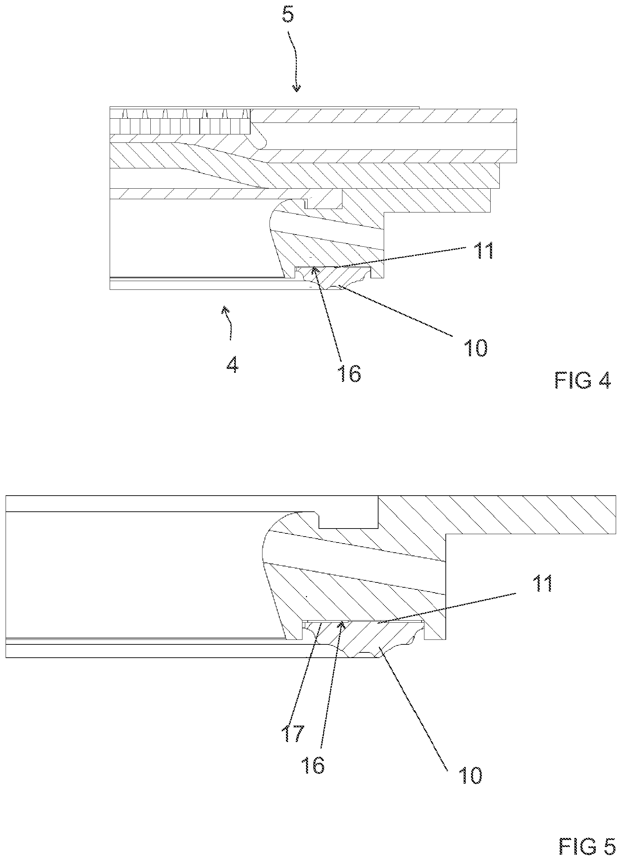

The method can as exemplified in figures 1 to 5, comprise providing an elongated sealing member 10, which is in the form of only one elongated sealing strip, and where the first ridge portion 14 and said at least one second ridge portion 18 being integral parts of said only one elongated sealing strip.

In such case the method can comprise providing only one elongated sealing strip having two opposite ends 19, and arranging the elongated sealing strip in the circumferential groove 11 so that the opposite ends 19 at least one of meet, touches each other, or form a butt joint. An advantage of using only one elongated sealing strip is that only one joint is formed.

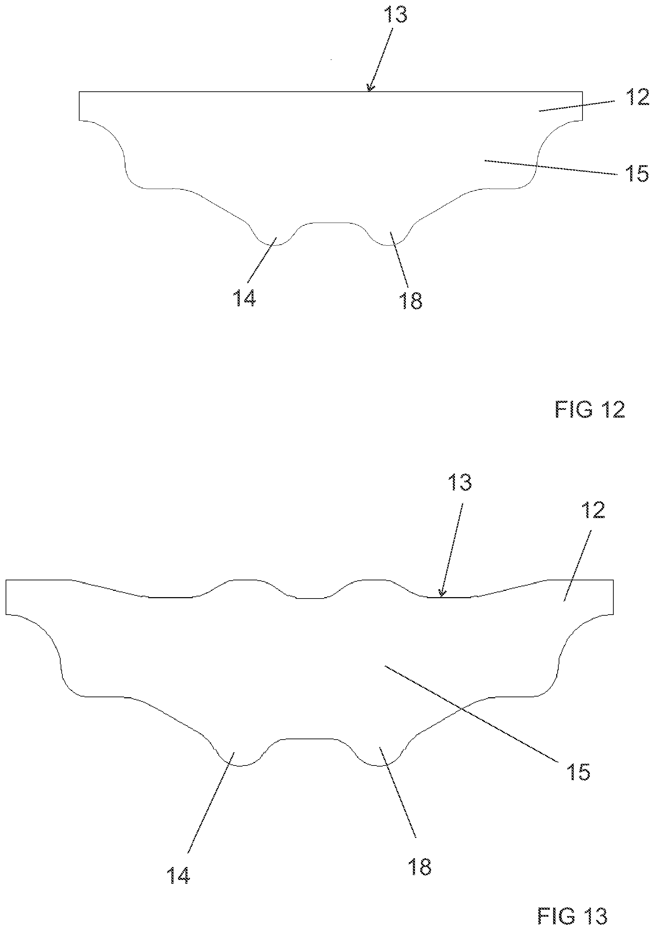

In such case the method can comprise cutting the opposite ends 19 of the elongated sealing strip so that the opposite ends 19 meet so that the opposite ends 19 are set in an angle and/or in a curved manner with respect to a longitudinal direction of the elongated sealing member 10 as shown in figure 13. An advantage of this is that the joint in the first ridge portion 14 will not be at the same place as the joint in said at least one second ridge portion 18 in the longitudinal direction of the elongated seal strip, which provides for a better seal effect a transversal direction of the elongated seal strip.

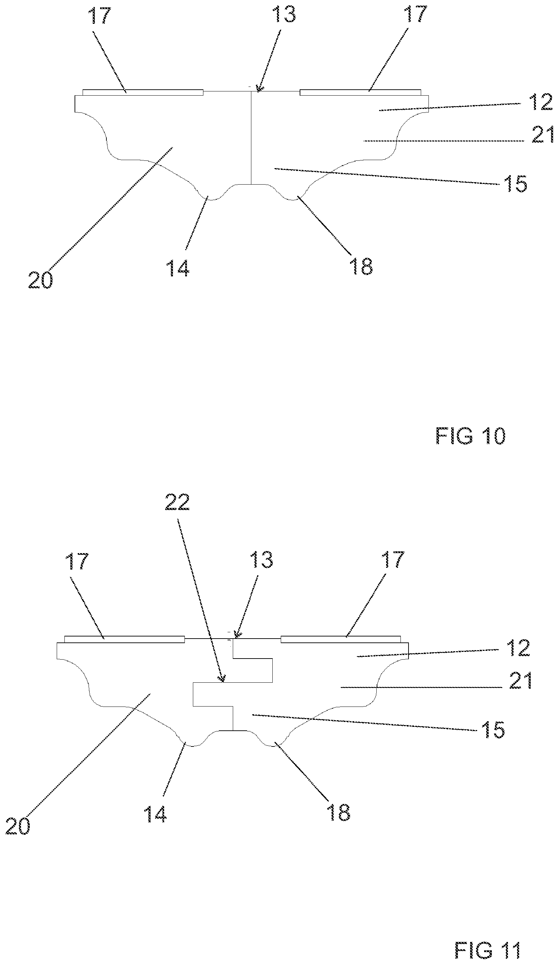

The method can as exemplified in figures 10 and 11, comprise providing an elongated sealing member 10 comprising only one first ridge portion 14 and only one second ridge portion 18, where said one first ridge portion 14 being a part of a first elongated sealing strip member 20, where said one second ridge portion 18 being a part of a second elongated sealing strip member 21, and where the first elongated sealing strip member 20 and the second elongated sealing strip member 21 being separate parts, and arranging the first elongated sealing member part and the second elongated sealing member part side by side in the circumferential groove 11 so that said one first ridge portion 14 and said one second ridge portion 18 run side by side. An advantage of this is that the elongated sealing member 10 can be replaced in part by for example only replacing the worn-out elongated sealing strip member.

In such case the method can comprise providing the first elongated sealing strip member 20 with opposite ends 19, providing the second elongated sealing strip member 21 with opposite ends 19, arranging the first elongated sealing strip member 20 in the circumferential groove 11 so that the opposite ends 19 of the first elongated sealing strip member 20 least one of meet, touches each other, or form a butt joint, and arranging the second elongated sealing strip member 21 in the circumferential groove 11 so that the opposite ends 19 of the first elongated sealing strip member 20 least one of meet, touches each other, or form a butt joint. An advantage of this is that only two joints are formed.

In such case the method can comprise connecting the first elongated sealing strip member 20 to the second elongated sealing strip member 21 with a tongue and groove joint 22 as is shown in figure 11. An advantage of this is that the first elongated sealing strip member 20 will be better connected to the second elongated sealing strip member 21.

Next the vertical pressure filter 1 and some variants and embodiments of the vertical pressure filter 1 will be described in greater detail.

The vertical pressure filter 1 comprises a filter pack 2 comprising a plurality of separate horizontally arranged and vertically movable filter plates 3, each having a lower surface 4 and an upper surface 5.

The vertical pressure filter 1 comprises an endless movable filter fabric belt 6 arranged in zigzag manner between the filter plates 3.

The vertical pressure filter 1 comprises closing and opening means 7 for vertically pressing said plurality of separate horizontally arranged and vertically movable filter plates 3 against each other into a closed state of the filter pack 2 to form filter chambers 8 between filter plates 3 and an upward facing surface section 9 of the endless movable filter fabric belt 6 and for vertically moving said plurality of separate horizontally arranged and vertically movable filter plates 3 away from each other into an open state of the filter pack 2 to open said filter chambers 8.

The vertical pressure filter 1 an elongated sealing member 10, which is completely formed of elastically deformable material, and which comprises a base portion 12 comprising a mounting surface 13, a first ridge portion 14 and an intermediate portion 15 between the base portion 12 and the first ridge portion 14.

The mounting surface 13 of the elongated sealing member 10 is attached to a bottom 16, which can be a plane bottom, as shown in the figures, of a circumferential groove 11 in the lower surface 4 of at least one separate horizontally arranged and vertically movable filter plate 3 by means of adhesive 17 that is provided between the mounting surface 13 of the elongated sealing member 10 and the bottom 16 of the circumferential groove 11 so that the first ridge portion 14 of the elongated sealing member 10 faces an upward facing surface section 9 of the endless movable filter fabric belt 6.

The elongated sealing member 10 is configured to press against the upper surface 5 of the endless movable filter fabric belt 6 in the closed state of the filter pack 2.

The elongated sealing member 10 comprises additionally at least one second ridge portion 18 that extends side-by-side, such as in parallel, with the first ridge portion 14. The elongated sealing member 10 can for example comprise one second ridge portion as shown in figure 6, two second ridge portions as shown in figure 7, three second ridge portions as shown in figure 8, or four second ridge portions as shown in figure 9.

The elongated sealing member 10 is arranged in the circumferential groove 11 in the lower surface 4 of said at least one separate horizontally arranged and vertically movable filter plate 3 so that also said at least one second ridge portion 18 of the elongated sealing member 10 faces said upward facing surface section 9 of the endless movable filter fabric belt 6.

The elongated sealing member 10 of the vertical pressure filter 1 can as exemplified in figures 1 to 5 be in the form of a single elongated sealing strip, and the first ridge portion 14 and the second ridge portion 18 can be integral parts of said single elongated sealing strip.

In such case the single elongated sealing strip has preferably, but not necessarily, two opposite ends 19, and the sealing strip being arranged in the circumferential groove 11 so that the opposite ends 19 at least one of meet, touches each other, or form a butt joint. An advantage of using only one elongated sealing strip is that only one joint is formed.

In such case the opposite ends 19 are preferably, but not necessarily, set in an angle and or in a curved manner with respect to the longitudinal direction of the elongated sealing member 10 as shown in figure 13. An advantage of this is that the joint in the first ridge portion 14 will not be at the same place as the joint in said at least one second ridge portion 18 in the longitudinal direction of the elongated seal strip, which provides for a better seal effect a transversal direction of the elongated seal strip.

The elongated sealing member 10 of the vertical pressure filter 1 can as exemplified in figures 10 and 11 comprise only one first ridge portion 14 and only one second ridge portion 18, so that the first ridge portion 14 is a part of a first elongated sealing strip member 20 of the elongated sealing member 10, so that the second ridge portion 18 is a part of a second elongated sealing strip member 21 of the elongated sealing member 10, so that the first elongated sealing strip member 20 and the second elongated sealing strip member 21 being separate parts, and so that the first elongated sealing member part and the second elongated sealing member part being arranged side by side in the circumferential groove 11 so that the first ridge portion 14 and the second ridge portion 18 run side by side.

In such case, the first elongated sealing strip member 20 can be in the form of a single first elongated sealing strip member 20 having opposite ends 19, and the second elongated sealing strip member 21 can be in the form of a single second elongated sealing strip member 21 having opposite ends 19, and the first elongated sealing strip member 20 is arranged in the circumferential groove 11 so that the opposite ends 19 of the first elongated sealing strip member 20 at least one of meet, touches each other, or form a butt joint, and the second elongated sealing strip member 21 is arranged in the circumferential groove 11 so that the opposite ends 19 of the first elongated sealing strip member 20 at least one of meet, touches each other, or form a butt joint. An advantage of this is that the elongated sealing member 10 can be replaced in part by for example only replacing the worn-out elongated sealing strip member.

In such case, the first elongated sealing strip member 20 can be connected to the second elongated sealing strip member 21 with a tongue and groove joint 22. An advantage of this is that the first elongated sealing strip member 20 will be better connected to the second elongated sealing strip member 21.

Next the elongated sealing member 10 for use in the method or for use in the vertical pressure filter 1 and some variants and embodiments of the vertical pressure filter 1 will be described in greater detail.

The elongated sealing member 10 is formed completely of elastically deformable material and comprises a base portion 12 comprising a mounting surface 13, a first ridge portion 14, and an intermediate portion 15 between the base portion 12 and the first ridge portion 14

The elongated sealing member 10 comprising additionally by at least one second ridge portion 18 that extends side-by-side , such as in parallel, with the first ridge portion 14. The elongated sealing member 10 can for example comprise one second ridge portion as shown in figure 6, two second ridge portions as shown in figure 7, three second ridge portions as shown in figure 8, or four second ridge portions as shown in figure 9.

The cross-section of the first ridge portion 14 has preferably, but not necessarily, the same dimensions and the same form as the cross-section of said at least one second ridge portion 18. An advantage of this is that the force exerted by the first ridge portion 14 on the base portion 12 and on the intermediate portion 15 will be the same as the force exerted by said at least one second ridge portion 18. Additionally, the first ridge portion 14 and said at least one second ridge portion 18 will provide for essentially identical sealing force.

The elongated sealing member 10 is preferably, but not necessarily, symmetrical with respect to a center plane that extend in a longitudinal direction of the elongated sealing member 10. An advantage of this is that the elongated sealing member 10 will be more evenly deformed, which extends the service-life of the elongated sealing member 10.

The base portion 12 of the elongated sealing member 10 is preferably, but not necessarily, symmetrical with respect to a center plane that extend in a longitudinal direction of the elongated sealing member 10. An advantage of this is that the elongated sealing member 10 will be more evenly deformed, which extends the service-life of the elongated sealing member 10.

The intermediate portion 15 of the elongated sealing member 10 is preferably, but not necessarily, symmetrical with respect to a center plane that extend in a longitudinal direction of the elongated sealing member 10. An advantage of this is that the elongated sealing member 10 will be more evenly deformed, which extends the service-life of the elongated sealing member 10.

The first ridge portion 14 and said at least one second ridge portion 18 are preferably, but not necessarily, symmetrically arranged with respect to a center plane that extend in a longitudinal direction of the elongated sealing member 10. An advantage of this is that the elongated sealing member 10 will be more evenly deformed, which extends the service-life of the elongated sealing member 10.

The height of the elongated sealing member 10 is preferably, but not necessarily, the same at the first ridge portion 14 and at said at least one second ridge portion 18. An advantage of this is that the elongated sealing member 10 will be more evenly deformed, which extends the service-life of the elongated sealing member 10.

The elongated sealing member 10 is preferably, but not necessarily, as shown in figures 6 to 9, in the form of a one-piece or single-piece elongated sealing strip, and the first ridge portion 14 and the second ridge portion 18 being integral parts of the elongated sealing strip. An advantage of this is that the elongated sealing member 10 is easier to mount.

Alternatively, the elongated sealing member 10 can comprise only one first ridge portion 14 and only one second ridge portion 18, so that the first ridge portion 14 is a part of a first elongated sealing strip member 20 of the elongated sealing member 10, so that the second ridge portion 18 is a part of a second elongated sealing strip member 21 of the elongated sealing member 10, and so that the first elongated sealing strip member 20 and the second elongated sealing strip member 21 being separate parts. An advantage of this is that the elongated sealing member 10 can be replaced in part by for example only replacing the worn-out elongated sealing strip member.

In such case, the first elongated sealing strip member 20 can be connected to the second elongated sealing strip member 21 with a tongue and groove joint 22. An advantage of this is that the first elongated sealing strip member 20 will be better connected to the second elongated sealing strip member 21.

The elongated sealing member 10 comprises preferably, but not necessarily, any of the following: Natural rubber (NR), Styrene butadiene rubber (SBR), Butyl rubber (IIR), Nitrile rubber (NBR), Epichlorohydrin rubber (ECO, CO), Chloroprene rubber (CR), Urethane rubber (U), Fluoro rubber (FPM), Silicone rubber (Q), Chlorsulphonated polyethylene rubber (CSM), Ethylene propylene rubber (EPDM), Styrenic block copolymers (TPE-s), Polyolefin blends (TPEo), Elastomeric alloys (TPE-v or TPV), Thermoplastic polyurethanes (TPU), Thermoplastic copolyester, and Thermoplastic polyamides

The elongated sealing member 10 comprises preferably, but not necessarily, adhesive 17 at the mounting surface 13 of the base portion 12, as shown in figures 6 to 11. An advantage of this is that the elongated sealing member 10 is easy to mount.

The adhesive 17 is preferably, but not necessarily, elastically deformable after curing to withstand alternating opening state and closing state of the filter pack 2.

The adhesive 17 is preferably, but not necessarily, selected so that it can attach to elastomers and metals.

The adhesive 17 is preferably, but not necessarily, selected so that it retains its adhesive function at a temperature range between -10 and 90°C.

The adhesive 17 comprises preferably, but not necessarily, any of the following: a heat-activated adhesive, a heat-activated tape, an acrylic foam adhesive, and an acrylic foam tape.

In an embodiment, the adhesive 17 is an heat-activated tape and bonded to the elongated sealing member 10 by heat-activation. The heat-activated adhesive guarantees a durable none especially, but not excluding others, to elongated sealing members 19 made of EPDM and TPE rubber.

In an embodiment, the adhesive 17 is an acrylic foam tape. Based on the visco-elastic consistence of acrylic foam tapes, a high cohesiveness combined with a brilliant shock- and weathering resistance is achieved.

The first ridge portion 14 and said at least one second ridge portion 18 are preferably, but not necessarily, rounded.

The mounting surface 13 of the base portion 12 is preferably, but not necessarily, as shown in figures 6 to 12, plane. The mounting surface 13 can alternative be non-plane, as shown in figure 13.

If the mounting surface 13 of the base portion 12 is plane, the height A of the base portion 12 as measured in a direction perpendicular to the mounting surface 13 of the base portion 12 is preferably, but not necessarily, between 1 and 5 mm, preferable between 1 and 3 mm, such as about 2 mm.

If the mounting surface 13 of the base portion 12 is plane, the width B of the base portion 12 as measured in a direction along to the mounting surface 13 of the base portion 12 is preferably, but not necessarily, being between 40 and 50 mm, preferable between 42 and 46 mm, such as about 44 mm.

If the mounting surface 13 of the base portion 12 is plane, the intermediate portion 15 has preferably, but not necessarily, opposite second opposite side planes 23, which extend essentially perpendicularly to the mounting surface 13 of the base portion 12.

If the mounting surface 13 of the base portion 12 is plane, the height C of the intermediate portion 15 as measured in a direction perpendicular to the mounting surface 13 of the base portion 12 is preferably, but not necessarily, between 7 and 13 mm, preferably between 8 and 10 mm, such as about 9 mm.

If the mounting surface 13 of the base portion 12 is plane, the width D of the intermediate portion 15 as measured in a direction parallel with the mounting surface 13 of the base portion 12 is preferably, but not necessarily, between 30 and 40 mm, preferably between 32 and 38 mm, such as 36 mm.

If the mounting surface 13 of the base portion 12 is plane, the height E of each of the first ridge portion 14 and said at least one second ridge portion 18 as measured in a direction perpendicular to the mounting surface 13 of the base portion 12 of the elongated sealing member 10 is preferably, but not necessarily, between 1 and 4 mm, preferable between 1 and 3 mm, such as about 2 mm.

If the mounting surface 13 of the base portion 12 is plane, the width F of each of the first ridge portion 14 and said at least one second ridge portion 18 as measured in a direction in parallel with the mounting surface 13 of the base portion 13 of the elongated sealing member 10 is preferably, but not necessarily, between 1 and 4 mm, preferable between 1 and 3 mm, such as about 2 mm.

## Claims

1. A method for sealing a vertical pressure filter (1) comprising a filter pack (2) comprising a plurality of separate horizontally arranged and vertically movable filter plates (3), each having a lower surface (4) and an upper surface (5), an endless movable filter fabric belt (6) arranged in zigzag manner between the filter plates (3), and closing and opening means (7) for vertically moving said plurality of separate horizontally arranged and vertically movable filter plates (3) against each other into a closed state of the filter pack (2) to form filter chambers (8) between the filter plates (3) and upward facing surface sections (9) of the endless movable filter fabric belt (6) and for vertically moving said plurality of separate horizontally arranged and vertically movable filter plates (3) away from each other into an open state of the filter pack (2) to open said filter chambers (8), wherein the method comprises
providing an elongated sealing member (10), which is completely formed of elastically deformable material and which comprises a base portion (12) comprising a mounting surface (13), a first ridge portion (14) and an intermediate portion (15) between the base portion (12) and the first ridge portion (14),
attaching the mounting surface (13) of the elongated sealing member (10) to a bottom (16) in a circumferential groove (11) in the lower surface (4) of at least one separate horizontally arranged and vertically movable filter plate (3) by means of adhesive (17) that is provided between the mounting surface (13) of the elongated sealing member (10) and the bottom (16) of the circumferential groove (11) so that the first ridge portion (14) of the elongated sealing member (10) faces an upward facing surface section (9) of the endless movable filter fabric belt (6), and
pressing the elongated sealing member (10) against the upward facing surface section (9) of the endless movable filter fabric belt (6) in the closed state of the filter pack (2) by means of the closing and opening means (7),
**characterized**
**by** the elongated sealing member (10) that is provided comprising additionally at least one second ridge portion (18) that extends side by side with the first ridge portion (14),
by arranging the elongated sealing member (10) in the circumferential groove (11) in the lower surface (4) of said at least one separate horizontally arranged and vertically movable filter plate (3) so that said at least one second ridge portion (18) of the elongated sealing member (10) also faces said upward facing surface section (9) of the endless movable filter fabric belt (6),
by the elongated sealing member (10) that is provided being symmetrical with respect to a center plane that extend in a longitudinal direction of the elongated sealing member (10),
by the mounting surface (13) of the elongated sealing member (10) that is provided being plane,
by the height A of the base portion (12) of the elongated sealing member (10) that is provided as measured in a direction perpendicular to the mounting surface (13) of the base portion (12) being between 1 and 5 mm,
by the width B of the base portion (12) of the elongated sealing member (10) that is provided as measured in a direction along to the mounting surface (13) of the base portion (12) being between 40 and 50 mm,
by the height C of the intermediate portion (15) of the elongated sealing member (10) that is provided as measured in a direction perpendicular to the mounting surface (13) of the base portion (12) being between 7 and 13 mm, and
by the height E of each of the first ridge portion (14) and said at least one second ridge portion (18) of the elongated sealing member (10) that is provided as measured in a direction perpendicular to the mounting surface (13) of the base portion (12) of the elongated sealing member (10) being between 1 and 4 mm.

2. The method according to claim 1, **characterized**
**by** providing an elongated sealing member (10), which is in the form of an elongated sealing strip, and where the first ridge portion (14) and said at least one second ridge portion (18) being integral parts of the elongated sealing strip.

3. The method according to claim 1 or 2, **characterized**
**by** providing an elongated sealing strip having two opposite ends (19), and
by arranging the sealing strip in the circumferential groove (11) so that the opposite ends (19) meet.

4. The method according to claim 3, **characterized**
**by** cutting the opposite ends (19) of the sealing strip so that the opposite ends (19) are set in an angle with respect to the longitudinal direction of the elongated sealing member (10).

5. The method according to claim 1, **characterized**
**by** providing an elongated sealing member (10) comprising only one first ridge portion (14) and only one second ridge portion (18), where said one first ridge portion (14) being a part of first elongated sealing strip member (20), where said one second ridge portion (18) being a part of a second elongated sealing strip member (21), and where the first elongated sealing strip member (20) and the second elongated sealing strip member (21) being separate parts, and
by arranging the first elongated sealing member part and the second elongated sealing member part side by side in the circumferential groove (11) so that said one first ridge portion (14) and said one second ridge portion (18) run side by side.

6. A vertical pressure filter (1) comprising
a filter pack (2) comprising a plurality of separate horizontally arranged and vertically movable filter plates (3), each having a lower surface (4) and an upper surface (5),
an endless movable filter fabric belt (6) arranged in zigzag manner between the filter plates (3),
closing and opening means (7) for vertically pressing said plurality of separate horizontally arranged and vertically movable filter plates (3) against each other into a closed state of the filter pack (2) to form filter chambers (8) between filter plates (3) and an upward facing surface section (9) of the endless movable filter fabric belt (6) and for vertically moving said plurality of separate horizontally arranged and vertically movable filter plates (3) away from each other into an open state of the filter pack (2) to open said filter chambers (8), and
an elongated sealing member (10), which is completely formed of elastically deformable material, and which comprises a base portion (12) comprising a mounting surface (13), a first ridge portion (14) and an intermediate portion (15) between the base portion (12) and the first ridge portion (14),
wherein the mounting surface (13) of the elongated sealing member (10) is attached to a bottom (16) of a circumferential groove (11) in the lower surface (4) of at least one separate horizontally arranged and vertically movable filter plate (3) by means of adhesive (17) that is provided between the mounting surface (13) of the elongated sealing member (10) and the bottom (16) of the circumferential groove (11) so that the first ridge portion (14) of the elongated sealing member (10) faces an upward facing surface section (9) of the endless movable filter fabric belt (6), and
wherein the elongated sealing member (10) is configured to press against the upper surface (5) of the endless movable filter fabric belt (6) in the closed state of the filter pack (2),
**characterized**
**by** the elongated sealing member (10) comprising additionally at least one second ridge portion (18) that extends side by side with the first ridge portion (14),
by the elongated sealing member (10) being arranged in the circumferential groove (11) in the lower surface (4) of said at least one separate horizontally arranged and vertically movable filter plate (3) so that also said at least one second ridge portion (18) of the elongated sealing member (10) faces said upward facing surface section (9) of the endless movable filter fabric belt (6),
by the elongated sealing member (10) being symmetrical with respect to a center plane that extend in a longitudinal direction of the elongated sealing member (10),
by the mounting surface (13) being plane,
by the height A of the base portion (12) as measured in a direction perpendicular to the mounting surface (13) of the base portion (12) being between 1 and 5 mm,
by the width B of the base portion (12) as measured in a direction along to the mounting surface (13) of the base portion (12) being between 40 and 50 mm,
by the height C of the intermediate portion (15) as measured in a direction perpendicular to the mounting surface (13) of the base portion (12) being between 7 and 13 mm, and
by the height E of each of the first ridge portion (14) and said at least one second ridge portion (18) as measured in a direction perpendicular to the mounting surface (13) of the base portion (12) of the elongated sealing member (10) being between 1 and 4 mm.

7. The vertical pressure filter according to claim 6, **characterized**
**by** the elongated sealing member (10) is in the form of an elongated sealing strip, and
by the first ridge portion (14) and the second ridge portion (18) being integral parts of the elongated sealing strip.

8. The vertical pressure filter according to claim 7, **characterized**
**by** the elongated sealing strip having two opposite ends (19), and
by the sealing strip being arranged in the circumferential groove (11) so that the opposite ends (19) meet.

9. The vertical pressure filter according to claim 8, **characterized**
**by** the opposite ends (19) are set in an angle and or in a curved manner with respect to the longitudinal direction of the elongated sealing member (10).

10. The vertical pressure filter according to claim 6, **characterized**
**by** the elongated sealing member (10) comprising only one first ridge portion (14) and only one second ridge portion (18),
by the first ridge portion (14) being a part of a first elongated sealing strip member (20) of the elongated sealing member (10),
by the second ridge portion (18) being a part of a second elongated sealing strip member (21) of the elongated sealing member (10),
by the first elongated sealing strip member (20) and the second elongated sealing strip member (21) being separate parts, and
by the first elongated sealing member part and the second elongated sealing member part being arranged side by side in the circumferential groove (11) so that the first ridge portion (14) and the second ridge portion (18) run side by side.

## Patentansprüche

1. Verfahren zum Abdichten eines vertikalen Druckfilters (1) umfassend ein Filterpaket (2), das mehrere separate horizontal angeordnete und vertikal bewegliche Filterplatten (3) umfasst, die jeweils eine untere Fläche (4) und eine obere Fläche (5) aufweisen, ein im Zickzack zwischen den Filterplatten (3) angeordnetes endloses bewegliches Filtertuchband (6), und ein Schließ- und Öffnungsmittel (7), um die mehreren separaten horizontal angeordneten und vertikal beweglichen Filterplatten (3) vertikal aneinander in einen geschlossenen Zustand des Filterpakets (2) zu bewegen, um Filterkammern (8) zwischen den Filterplatten (3) und nach oben weisenden Oberflächenabschnitten (9) des endlosen beweglichen Filtertuchbands (6) auszubilden, und um die mehreren separaten horizontal angeordneten und vertikal beweglichen Filterplatten (3) vertikal voneinander weg in einen offenen Zustand des Filterpakets (2) zu bewegen, um die Filterkammern (8) zu öffnen, wobei das Verfahren umfasst:
Bereitstellen eines länglichen Abdichtelements (10), das vollständig aus elastisch verformbarem Material ausgebildet ist und das einen Basisabschnitt (12) umfasst, der eine Montagefläche (13), einen ersten Wulstabschnitt (14) und einen Zwischenabschnitt (15) zwischen dem Basisabschnitt (12) und dem ersten Wulstabschnitt (14) umfasst,
Anbringen der Montagefläche (13) des länglichen Abdichtelements (10) an einem Boden (16) in einer umlaufenden Rille (11) in der unteren Fläche (4) mindestens einer separaten horizontal angeordneten und vertikal beweglichen Filterplatte (3) vermittels eines zwischen der Montagefläche (13) des länglichen Abdichtelements (10) und dem Boden (16) der umlaufenden Rille (11) vorgesehenen Klebstoffs (17) dergestalt angebracht ist, dass der erste Wulstabschnitt (14) des länglichen Abdichtelements (10) einem nach oben weisenden Oberflächenabschnitt (9) des endlosen beweglichen Filtertuchbands (6) zugewandt ist, und
Anpressen des länglichen Abdichtelements (10) an den nach oben weisenden Oberflächenabschnitt (9) des endlosen beweglichen Filtertuchbands (6) im geschlossenen Zustand des Filterpakets (2) vermittels des Schließ- und Öffnungsmittels (7),
**gekennzeichnet dadurch,**
**dass** das bereitgestellte längliche Abdichtelement (10) zusätzlich mindestens einen zweiten Wulstabschnitt (18) umfasst, der sich seitlich neben dem ersten Wulstabschnitt (14) erstreckt,
**dass** das längliche Abdichtelement (10) in der umlaufenden Rille (11) in der unteren Fläche (4) der mindestens einen separaten horizontal angeordneten und vertikal beweglichen Filterplatte (3) dergestalt angeordnet ist, dass der mindestens eine zweite Wulstabschnitt (18) des länglichen Abdichtelements (10) auch dem nach oben weisenden Oberflächenabschnitt (9) des endlosen beweglichen Filtertuchbands (6) zugewandt ist,
**dass** das bereitgestellte längliche Abdichtelement (10) symmetrisch zu einer mittigen Ebene ist, die sich in einer Längsrichtung des länglichen Abdichtelements (10) erstreckt,
**dass** die Montagefläche (13) des bereitgestellten länglichen Abdichtelements (10) plan ist,
**dass** die Höhe A des Basisabschnitts (12) des bereitgestellten länglichen Abdichtelements (10), gemessen in einer rechtwinklig zur Montagefläche (13) des Basisabschnitts (12) verlaufenden Richtung, zwischen 1 und 5 mm beträgt,
**dass** die Breite B des Basisabschnitts (12) des bereitgestellten länglichen Abdichtelements (10), gemessen in einer entlang der Montagefläche (13) des Basisabschnitts (12) verlaufenden Richtung, zwischen 40 und 50 mm beträgt,
**dass** die Höhe C des Zwischenabschnitts (15) des bereitgestellten länglichen Abdichtelements (10), gemessen in einer rechtwinklig zur Montagefläche (13) des Basisabschnitts (12) verlaufenden Richtung, zwischen 7 und 13 mm beträgt, und
**dass** die Höhe E sowohl des ersten Wulstabschnitts (14) als auch des mindestens einen zweiten Wulstabschnitts (18) des bereitgestellten länglichen Abdichtelements (10), gemessen in einer rechtwinklig zur Montagefläche (13) des Basisabschnitts (12) des länglichen Abdichtelements (10) verlaufenden Richtung, zwischen 1 und 4 mm beträgt.

2. Verfahren nach Anspruch 1, **gekennzeichnet durch**
Bereitstellen eines länglichen Abdichtelements (10), das die Form eines länglichen Dichtstreifens aufweist, und wobei der erste Wulstabschnitt (14) und der mindestens eine zweite Wulstabschnitt (18) integrale Bestandteile des länglichen Dichtstreifens sind.

3. Verfahren nach Anspruch 1 oder 2, **gekennzeichnet durch**
Bereitstellen eines länglichen Dichtstreifens, der zwei entgegengesetzte Enden (19) aufweist, und
Anordnen des Dichtstreifens in der umlaufenden Rille (11) dergestalt, dass die entgegengesetzten Enden (19) zusammentreffen.

4. Verfahren nach Anspruch 3, **gekennzeichnet durch**
Schneiden der entgegengesetzten Enden (19) des Dichtstreifens dergestalt, dass die entgegengesetzten Enden (19) in einem Winkel zur Längsrichtung des länglichen Abdichtelements (10) eingerichtet werden.

5. Verfahren nach Anspruch 1, **gekennzeichnet durch**
Bereitstellen eines länglichen Abdichtelements (10), das nur einen ersten Wulstabschnitt (14) und nur einen zweiten Wulstabschnitt (18) umfasst, wobei der eine erste Wulstabschnitt (14) Teil eines ersten länglichen Dichtstreifenelements (20) ist, wobei der eine zweite Wulstabschnitt (18) Teil eines zweiten länglichen Dichtstreifenelements (21) ist, und wobei das erste längliche Dichtstreifenelement (20) und das zweite längliche Dichtstreifenelement (21) separate Teile sind, und
Anordnen des ersten länglichen Dichtstreifenelementteils und des zweiten länglichen Dichtstreifenelementteils seitlich nebeneinander in der umlaufenden Rille (11), so dass der eine erste Wulstabschnitt (14) und der eine zweite Wulstabschnitt (18) Seite an Seite verlaufen.

6. Vertikaler Druckfilter (1) umfassend
ein Filterpaket (2), das mehrere separate horizontal angeordnete und vertikal bewegliche Filterplatten (3) umfasst, die jeweils eine untere Fläche (4) und eine obere Fläche (5) aufweisen,
ein im Zickzack zwischen den Filterplatten (3) angeordnetes endloses bewegliches Filtertuchband (6),
ein Schließ- und Öffnungsmittel (7), um die mehreren separaten horizontal angeordneten und vertikal beweglichen Filterplatten (3) vertikal aneinander in einen geschlossenen Zustand des Filterpakets (2) zu bewegen, um Filterkammern (8) zwischen den Filterplatten (3) und einem nach oben weisenden Oberflächenabschnitt (9) des endlosen beweglichen Filtertuchbands (6) auszubilden, und um die mehreren separaten horizontal angeordneten und vertikal beweglichen Filterplatten (3) vertikal voneinander weg in einen offenen Zustand des Filterpakets (2) zu bewegen, um die Filterkammern (8) zu öffnen, und
ein längliches Abdichtelement (10), das vollständig aus elastisch verformbarem Material ausgebildet ist und das einen Basisabschnitt (12) umfasst, der eine Montagefläche (13), einen ersten Wulstabschnitt (14) und einen Zwischenabschnitt (15) zwischen dem Basisabschnitt (12) und dem ersten Wulstabschnitt (14) umfasst,
wobei die Montagefläche (13) des länglichen Abdichtelements (10) an einem Boden (16) einer umlaufenden Rille (11) in der unteren Fläche (4) mindestens einer separaten horizontal angeordneten und vertikal beweglichen Filterplatte (3) vermittels eines zwischen der Montagefläche (13) des länglichen Abdichtelements (10) und dem Boden (16) der umlaufenden Rille (11) vorgesehenen Klebstoffs (17) dergestalt angebracht ist, dass der erste Wulstabschnitt (14) des länglichen Abdichtelements (10) einem nach oben weisenden Oberflächenabschnitt (9) des endlosen beweglichen Filtertuchbands (6) gegenüberliegt, und
wobei das längliche Abdichtelement (10) dazu ausgelegt ist, im geschlossenen Zustand des Filterpakets (2) einen Druck an die obere Fläche (5) des endlosen beweglichen Filtertuchbands (6) auszuüben,
**gekennzeichnet dadurch,**
**dass** das längliche Abdichtelement (10) zusätzlich mindestens einen zweiten Wulstabschnitt (18) umfasst, der sich seitlich neben dem ersten Wulstabschnitt (14) erstreckt,
**dass** das längliche Abdichtelement (10) in der umlaufenden Rille (11) in der unteren Fläche (4) der mindestens einen separaten horizontal angeordneten und vertikal beweglichen Filterplatte (3) dergestalt angeordnet ist, dass auch der mindestens eine zweite Wulstabschnitt (18) des länglichen Abdichtelements (10) dem nach oben weisenden Oberflächenabschnitt (9) des endlosen beweglichen Filtertuchbands (6) zugewandt ist,
**dass** das längliche Abdichtelement (10) symmetrisch zu einer mittigen Ebene ist, die sich in einer Längsrichtung des länglichen Abdichtelements (10) erstreckt,
**dass** die Montagefläche (13) plan ist,
**dass** die Höhe A des Basisabschnitts (12), gemessen in einer rechtwinklig zur Montagefläche (13) des Basisabschnitts (12) verlaufenden Richtung, zwischen 1 und 5 mm beträgt,
**dass** die Breite B des Basisabschnitts (12), gemessen in einer entlang der Montagefläche (13) des Basisabschnitts (12) verlaufenden Richtung, zwischen 40 und 50 mm beträgt,
**dass** die Höhe C des Zwischenabschnitts (15), gemessen in einer rechtwinklig zur Montagefläche (13) des Basisabschnitts (12) verlaufenden Richtung, zwischen 7 und 13 mm beträgt, und
**dass** die Höhe E sowohl des ersten Wulstabschnitts (14) als auch des mindestens einen zweiten Wulstabschnitts (18), gemessen in einer rechtwinklig zur Montagefläche (13) des Basisabschnitts (12) des länglichen Abdichtelements (10) verlaufenden Richtung, zwischen 1 und 4 mm beträgt.

7. Vertikaler Druckfilter nach Anspruch 6, **gekennzeichnet dadurch,**
**dass** das längliche Abdichtelement (10) die Form eines länglichen Dichtstreifens aufweist, und
**dass** der erste Wulstabschnitt (14) und der zweite Wulstabschnitt (18) integrale Bestandteile des länglichen Dichtstreifens sind.

8. Vertikaler Druckfilter nach Anspruch 7, **gekennzeichnet dadurch,**
**dass** der längliche Dichtstreifen zwei entgegengesetzte Enden (19) aufweist, und
**dass** der Dichtstreifen in der umlaufenden Rille (11) so angeordnet ist, dass die entgegengesetzten Enden (19) zusammentreffen.

9. Vertikaler Druckfilter nach Anspruch 8, **gekennzeichnet dadurch,**
**dass** die entgegengesetzten Enden (19) in einem Winkel und/oder gekrümmt zur Längsrichtung des länglichen Abdichtelements (10) eingerichtet sind.

10. Vertikaler Druckfilter nach Anspruch 6, **gekennzeichnet dadurch,**
**dass** das längliche Abdichtelement (10) nur einen ersten Wulstabschnitt (14) und nur einen zweiten Wulstabschnitt (18) umfasst,
**dass** der erste Wulstabschnitt (14) Teil eines ersten länglichen Dichtstreifenelements (20) des länglichen Abdichtelements (10) ist,
**dass** der zweite Wulstabschnitt (18) Teil eines zweiten länglichen Dichtstreifenelements (21) des länglichen Abdichtelements (10) ist,
**dass** das erste längliche Dichtstreifenelement (20) und das zweite längliche Dichtstreifenelement (21) separate Teile sind, und
**dass** das erste längliche Dichtstreifenelementteil und das zweite längliche Dichtstreifenelementteil seitlich nebeneinander in der umlaufenden Rille (11) dergestalt angeordnet sind, dass der erste Wulstabschnitt (14) und der zweite Wulstabschnitt (18) Seite an Seite verlaufen.

## Revendications

1. Procédé pour étancher un filtre-presse vertical (1) comprenant un ensemble de filtration (2) comprenant une pluralité de plaques filtrantes horizontalement disposées et verticalement mobiles séparées (3), chacune comportant une surface inférieure (4) et une surface supérieure (5), une bande de toile filtrante mobile sans fin (6) disposée en zigzag entre les plaques filtrantes (3), et un moyen de fermeture et d'ouverture (7) pour déplacer verticalement lesdites plusieurs plaques filtrantes horizontalement disposées et verticalement mobiles séparées (3) les unes contre les autres vers un état fermé de l'ensemble de filtration (2) afin de former des chambres filtrantes (8) entre les plaques filtrantes (3) et des sections de surface tournées vers le haut (9) de la bande de toile filtrante mobile sans fin (6), et pour éloigner verticalement lesdites plusieurs plaques filtrantes horizontalement disposées et verticalement mobiles séparées (3) les unes des autres vers un état ouvert de l'ensemble de filtration (2) afin d'ouvrir lesdites chambres filtrantes (8), ledit procédé comprenant les étapes consistant à :
fournir un élément d'étanchéité allongé (10) qui est entièrement formé d'un matériau élastiquement déformable et qui comprend une partie de base (12) comprenant une surface de montage (13), une première partie de nervure (14) et une partie intermédiaire (15) entre la partie de base (12) et la première partie de nervure (14),
attacher la surface de montage (13) de l'élément d'étanchéité allongé (10) à un fond (16) d'une rainure circonférentielle (11) dans la surface inférieure (4) d'au moins une plaque filtrante horizontalement disposée et verticalement mobile séparée (3) au moyen d'un adhésif (17) qui est fourni entre la surface de montage (13) de l'élément d'étanchéité allongé (10) et le fond (16) de la rainure circonférentielle (11), de sorte que la première partie de nervure (14) de l'élément d'étanchéité allongé (10) soit en face d'une section de surface tournée vers le haut (9) de la bande de toile filtrante mobile sans fin (6), et
presser l'élément d'étanchéité allongé (10) contre la section de surface tournée vers le haut (9) de la bande de toile filtrante mobile sans fin (6) dans l'état fermé de l'ensemble de filtration (2) moyennant le moyen de fermeture et d'ouverture (7),
**caractérisé**
**en ce que** l'élément d'étanchéité allongé (10) qui est fourni comprend en outre au moins une deuxième partie de nervure (18) qui s'étend côte à côte avec la première partie de nervure (14),
par l'étape consistant à disposer l'élément d'étanchéité allongé (10) dans la rainure circonférentielle (11) dans la surface inférieure (4) de ladite au moins une plaque filtrante horizontalement disposée et verticalement mobile séparée (3) de telle sorte que ladite au moins une deuxième partie de nervure (18) de l'élément d'étanchéité allongé (10) soit également en face de la section de surface tournée vers le haut (9) de la bande de toile filtrante mobile sans fin (6),
**en ce que** l'élément d'étanchéité allongé (10) qui est fourni est symétrique par rapport à un plan central qui s'étend dans un sens longitudinal de l'élément d'étanchéité allongé (10),
**en ce que** la surface de montage (13) de l'élément d'étanchéité allongé (10) qui est fourni est plane,
**en ce que** la hauteur A de la partie de base (12) de l'élément d'étanchéité allongé (10) qui est fourni, mesurée dans un sens perpendiculaire à la surface de montage (13) de la partie de base (12), est comprise entre 1 et 5 mm,
**en ce que** la largeur B de la partie de base (12) de l'élément d'étanchéité allongé (10) qui est fourni, mesurée dans un sens le long de la surface de montage (13) de la partie de base (12), est comprise entre 40 et 50 mm,
**en ce que** la hauteur C de la partie intermédiaire (15) de l'élément d'étanchéité allongé (10) qui est fourni, mesurée dans un sens perpendiculaire à la surface de montage (13) de la partie de base (12), est comprise entre 7 et 13 mm, et
**en ce que** la hauteur E de chacune de la première partie de nervure (12) et de ladite au moins une deuxième partie de nervure (18) de l'élément d'étanchéité allongé (10) qui est fourni, mesurée dans un sens perpendiculaire à la surface de montage (13) de la partie de base (12) de l'élément d'étanchéité allongé (10), est comprise entre 1 et 4 mm.

2. Procédé selon la revendication 1, **caractérisé par** l'étape consistant à
fournir un élément d'étanchéité allongé (10) qui est en forme d'une bande d'étanchéité allongée et dans lequel la première partie de nervure (14) et ladite au moins une deuxième partie de nervure (18) sont des parties intégrantes de la bande d'étanchéité allongée.

3. Procédé selon la revendication 1 ou 2, **caractérisé par** les étapes consistant à
fournir une bande d'étanchéité allongée comportant deux bouts opposés (19), et
disposer la bande d'étanchéité dans une rainure circonférentielle (11) de telle sorte que les bouts opposés (19) se rejoignent.

4. Procédé selon la revendication 3, **caractérisé par** l'étape consistant à couper les bouts opposés (19) de la bande d'étanchéité de telle sorte que les bouts opposés (19) soient ajustés dans un angle par rapport au sens longitudinal de l'élément d'étanchéité allongé (10).

5. Procédé selon la revendication 1, **caractérisé par** les étapes consistant à
fournir un élément d'étanchéité allongé (10) comprenant une seule première partie de nervure (14) et une seule deuxième partie de nervure (18), ladite seule première partie de nervure (14) faisant partie d'un premier élément de bande d'étanchéité allongé (20), ladite seule deuxième partie de nervure (18) faisant partie d'un deuxième élément de bande d'étanchéité allongé (21), et ledit premier élément de bande d'étanchéité allongé (20) et ledit deuxième élément d'étanchéité allongé (21) étant des pièces séparées, et
disposer la première pièce d'élément d'étanchéité allongée et la deuxième pièce d'élément d'étanchéité allongée côte à côte dans la rainure circonférentielle (11) de telle sorte que ladite seule première partie de nervure (14) et ladite seule deuxième partie de nervure (18) s'étendent côte à côte.

6. Filtre-presse vertical (1) comprenant
un ensemble de filtration (2) comprenant une pluralité de plaques filtrantes horizontalement disposées et verticalement mobiles séparées (3), chacune comportant une surface inférieure (4) et une surface supérieure (5),
une bande de toile filtrante mobile sans fin (6) disposée en zigzag entre les plaques filtrantes (3),
un moyen de fermeture et d'ouverture (7) pour presser verticalement lesdites plusieurs plaques filtrantes horizontalement disposées et verticalement mobiles séparées (3) les unes contre les autres vers un état fermé de l'ensemble de filtration (2) afin de former des chambres filtrantes (8) entre les plaques filtrantes (3) et une section de surface tournée vers le haut (9) de la bande de toile filtrante mobile sans fin (6), et pour éloigner verticalement lesdites plusieurs plaques filtrantes horizontalement disposées et verticalement mobiles séparées (3) les unes des autres vers un état ouvert de l'ensemble de filtration (2) afin d'ouvrir les chambres filtrantes (8), et
un élément d'étanchéité allongé (10) qui est entièrement formé d'un matériau élastiquement déformable et qui comprend une partie de base (12) comprenant une surface de montage (13), une première partie de nervure (14) et une partie intermédiaire (15) entre la partie de base (12) et la première partie de nervure (14),
dans lequel la surface de montage (13) de l'élément d'étanchéité allongé (10) est attachée à un fond (16) d'une rainure circonférentielle (11) dans la surface inférieure (4) d'au moins une plaque filtrante horizontalement disposée et verticalement mobile séparée (3) au moyen d'un adhésif (17) qui est fourni entre la surface de montage (13) de l'élément d'étanchéité allongé (10) et le fond (16) de la rainure circonférentielle (11), de telle sorte que la première partie de nervure (14) de l'élément d'étanchéité allongé (10) soit en face d'une section de surface tournée vers le haut (9) de la bande de toile filtrante mobile sans fin (6), et
dans lequel l'élément d'étanchéité allongé (10) est configuré pour se plaquer contre la surface supérieure (5) de la bande de toile filtrante mobile sans fin (6) dans l'état fermé de l'ensemble de filtration (2),
**caractérisé en ce**
**que** l'élément d'étanchéité allongé (10) comprend en outre au moins une deuxième partie de nervure (18) qui s'étend côte à côte avec la première partie de nervure (14),
**que** l'élément d'étanchéité allongé (10) est disposé dans la rainure circonférentielle (11) dans la surface inférieure (4) de ladite au moins une plaque filtrante horizontalement disposée et verticalement mobile séparée (3) de telle sorte que ladite au moins une deuxième partie de nervure (18) de l'élément d'étanchéité allongé (10) soit également en face de la section de surface tournée vers le haut (9) de la bande de toile filtrante mobile sans fin (6),
**que** l'élément d'étanchéité allongé (10) est symétrique par rapport à un plan central qui s'étend dans un sens longitudinale de l'élément d'étanchéité allongé (10),
**que** la surface de montage (13) est plane,
**que** la hauteur A de la partie de base (12), mesurée dans un sens perpendiculaire à la surface de montage (13) de la partie de base (12), est comprise entre 1 et 5 mm,
**que** la largeur B de la partie de base (12), mesurée dans un sens le long de la surface de montage (13) de la partie de base (12), est comprise entre 40 et 50 mm,
**que** la hauteur C de la partie intermédiaire (15), mesurée dans un sens perpendiculaire à la surface de montage (13) de la partie de base (12), est comprise entre 7 et 13 mm, et
**que** la hauteur E de chacune de la première partie de nervure (12) et de ladite au moins une deuxième partie de nervure (18), mesurée dans un sens perpendiculaire à la surface de montage (13) de la partie de base (12) de l'élément d'étanchéité allongé (10), est comprise entre 1 et 4 mm.

7. Filtre-presse vertical selon la revendication 6, **caractérisé en ce**
**que** l'élément d'étanchéité allongé (10) est en forme d'une bande d'étanchéité allongée, et
**que** la première partie de nervure (14) et la deuxième partie de nervure (18) sont des parties intégrantes de la bande d'étanchéité allongée.

8. Filtre-presse vertical selon la revendication 7, **caractérisé en ce**
**que** la bande d'étanchéité allongée comprend deux bouts opposés (19), et
**que** la bande d'étanchéité est disposée dans la rainure circonférentielle (11) de telle sorte que les bouts opposés (19) se rejoignent.

9. Filtre-presse vertical selon la revendication 8, **caractérisé en ce que** les bouts opposés (19) sont ajustés dans un angle et/ou de manière courbée par rapport au sens longitudinal de l'élément d'étanchéité allongé (10).

10. Filtre-presse vertical selon la revendication 6, **caractérisé en ce**
**que** l'élément d'étanchéité allongé (10) comprend une seule première partie de nervure (14) et une seule deuxième partie de nervure (18),
**que** la première partie de nervure (14) fait partie d'un premier élément de bande d'étanchéité allongé (20) de l'élément d'étanchéité allongé (10),
**que** la deuxième partie de nervure (18) fait partie d'un deuxième élément de bande d'étanchéité allongé (21) de l'élément d'étanchéité allongé (10),
**que** le premier élément de bande d'étanchéité allongé (20) et le deuxième élément d'étanchéité allongé (21) sont des pièces séparées, et
**que** le que la première pièce d'élément d'étanchéité allongée et la deuxième pièce d'élément d'étanchéité allongée sont disposées côte à côte dans la rainure circonférentielle (11) de telle sorte que la première partie de nervure (14) et la deuxième partie de nervure (18) s'étendent côte à côte.
